# EUROPÄISCHE PATENTSCHRIFT

(11) **EP 3 545 207 B1**
(45) Veröffentlichungstag und Bekanntmachung des Hinweises auf die Patenterteilung: **06.01.2021**
(21) Anmeldenummer: 17859363.8
(22) Anmeldetag: 23.11.2017
(51) Int. Cl.: F16D 63/00, B60T 1/00, F16H 63/34

(54) **PARKSPERRE FÜR EIN KRAFTFAHRZEUG**
PARK LOCK FOR A MOTOR VEHICLE
FREIN DE STATIONNEMENT POUR UN VÉHICULE AUTOMOBILE

(30) Priorität: 25.11.2016 DE 102016223473
(43) Veröffentlichungstag der Anmeldung: 02.10.2019
(73) Patentinhaber: Schaeffler Technologies AG & Co. KG, 91074 Herzogenaurach (DE)
(72) Erfinder: KRÄMER, Klaus, 91438 Lenkersheim (DE); LÖFFELMANN, Jochen, 91330 Eggolsheim (DE); ROST, Markus, 91074 Herzogenaurach (DE)
(86) Internationale Anmeldenummer: PCT/DE2017/100996
(87) Internationale Veröffentlichungsnummer: WO 2018/108204

(56) Entgegenhaltungen:
- EP-A2- 0 950 589
- DE-A1-102010 053 857
- US-A1- 2011 186 400
- US-B1- 6 279 713

## Beschreibung

### Gebiet der Erfindung

Die Erfindung betrifft eine Parksperre für ein Kraftfahrzeug, wobei die Parksperre aufweist: eine Sperrklinke, die um eine Drehachse schwenkbar angeordnet ist und einen Klinkenzahn aufweist, der zum formschlüssigen Eingriff in ein Parksperrenrad ausgebildet ist, einen Aktuator zur Betätigung der Sperrklinke, so dass diese reversibel mit ihrem Klinkenzahn in Eingriff mit dem Parksperrenrad gebracht werden kann.

### Hintergrund der Erfindung

Eine Parksperre ist aus der DE 10 2010 053 857 A1 bekannt. Eine ähnliche Lösung zeigt die DE 10 2011 080 498 A1. Bei der letztgenannten Lösung kommt als mechanisches Getriebeelement zur Übertragung der Bewegung des Aktuators auf die Sperrklinke ein Planetenwälzgetriebe zum Einsatz. Damit ist es möglich, relativ hohe Übertragungskräfte zu realisieren. Weitere Parksperren sind in US 6 279 713 B1 und EP 0 950 589 A2 gezeigt.

Beim Parken eines Fahrzeugs beispielsweise an einem Hang erzeugt das Fahrzeuggewicht, abhängig vom Raddurchmesser, von der Getriebeübersetzung und vom Radius des Sperrrads (Sperrverzahnung) eine Kraft auf die geschlossene Klinke und somit wiederrum auf den Parksperrenmechanismus. Beim Entriegeln der Parksperre am Hang muss somit diese anliegende Kraft überwunden werden.

Die Kräfte müssen sicher abgestützt werden, andererseits sollen die Parksperre und das Getriebe möglichst leicht bauen. Im Stand der Technik wird der Parksperrenhebel als Sperrklinke im Getriebegehäuse einzeln montiert und angefedert. Die Montage ist aufwändig und hat zur Folge, dass die Sperrklinke erst nach der Montage gesichert ist.

### Aufgabe der Erfindung

Der vorliegenden Erfindung liegt die Aufgabe zugrunde, eine gewichtsreduzierte Parksperre zu realisieren, die eine leichte und kostengünstige Montage erlaubt.

### Zusammenfassung der Erfindung

Die Aufgabe wird durch eine Parksperre gemäß Anspruch 1 gelöst. Die Sperrklinke weist dazu eine Klinkenausnehmung auf, die auch als Durchgangsausnehmung ausgebildet sein kann, in die ein Eingriffsmittel eingreift. Durch die Klinkenausnehmung baut die Sperrklinke leicht, und das Eingriffsmittel kann durch Eingreifen in die Klinkenausnehmung diese am Gehäuse sichern. Eine externe Halterung der Sperrklinke ist nicht erforderlich. Vorteilhafterweise kann die Sperrklinke durch das Eingriffsmittel auch schon vorgespannt vormontiert werden.

Der Eingriff des Eingriffsmittels in den Klinkenkörper erfordert keine gesonderte Funktionsflächenbearbeitung der Sperrklinke. Das Eingriffsmittel haltert die Sperrklinke und sichert sie gegen ein Verlieren. Dazu ist es beispielsweise mit dem Gehäuse fest verbunden.

In einer Ausgestaltung ist das Eingriffsmittel als ein Bolzen ausgebildet. Mit einer runden Außenkontur kann er gegebenenfalls reibungsarm in der Klinkenausnehmung der Sperrklinke gleiten, wenn diese betätigt wird. Alternativ ist die Klinkenausnehmung so groß, dass das Eingriffsmittel beim Betätigen nicht an deren Wände stößt. Die Klinkenausnehmung ist vorzugsweise als ein Langloch ausgebildet, das dem Bolzen einen Bewegungsspielraum ermöglicht.

In einer Weiterbildung weist das Langloch entlang seiner Länge keine konstante Breite auf, sondern eine veränderliche. Damit ist es an die Kontur der Sperrklinke gut anpassbar.

Die Parksperre kann in verschiedenen Arten von Getrieben verbaut werden. Beispielsweise eignet sie sich für Kraftfahrzeuge mit manuellen Getrieben, mit automatisierten oder automatischen Getrieben oder für Getriebe von Elektrofahrzeugen.

Die Parksperre kann ein eigenes Gehäuse als Parksperrengehäuse aufweisen. Das Parksperrengehäuse bildet dann mit dem Getriebegehäuse entweder ein gemeinsames Gesamtgehäuse, oder das Parksperrengehäuse ist innerhalb des Getriebegehäuses angeordnet. Alternativ kann die Parksperre ohne eigenes Gehäuse sein, so dass das Gehäuse für die Parksperre das Getriebegehäuse selbst ist.

### Kurze Beschreibung der Figuren

In den Figuren ist ein Ausführungsbeispiel der Erfindung dargestellt. Es zeigen:
- Figur 1: die wesentlichen Bauteile einer ersten erfindungsgemäßen Parksperre ohne ein Gehäuse im Querschnitt,
- Figur 2: die Parksperre gemäß Figur 1 mit einem zusätzlichen Gehäuse in einer Aufsicht,
- Figur 3: die Parksperre gemäß Figur 2 mit dem zusätzlichen Gehäuse in einer perspektivischen Schrägansicht,
- Figur 4: die Parksperre gemäß Figur 3 ohne das zusätzliche Gehäuse in der gleichen perspektivischen Schrägansicht,
- Figur 5: die Parksperre gemäß Figur 4 in einer anderen perspektivischen Schrägansicht ohne eine Armierung und
- Figur 6: eine Parksperre im Querschnitt ohne das Eingriffmittel.

### Ausführliche Beschreibung der Figuren

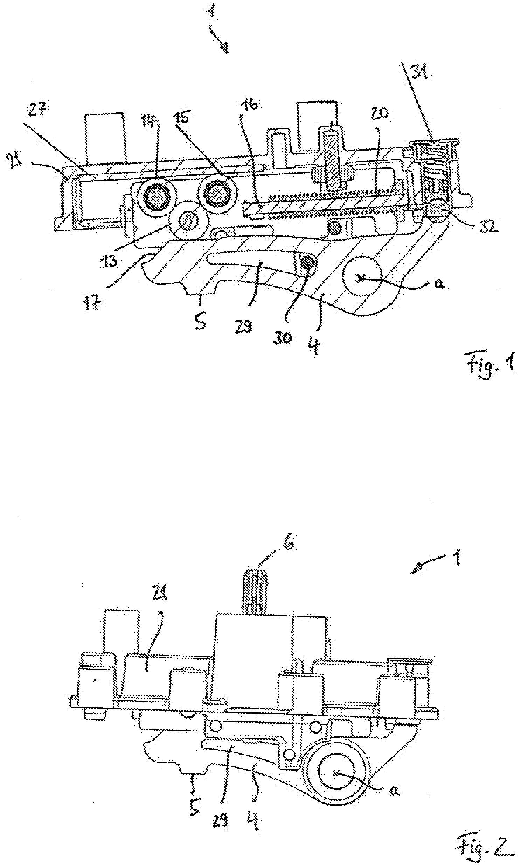

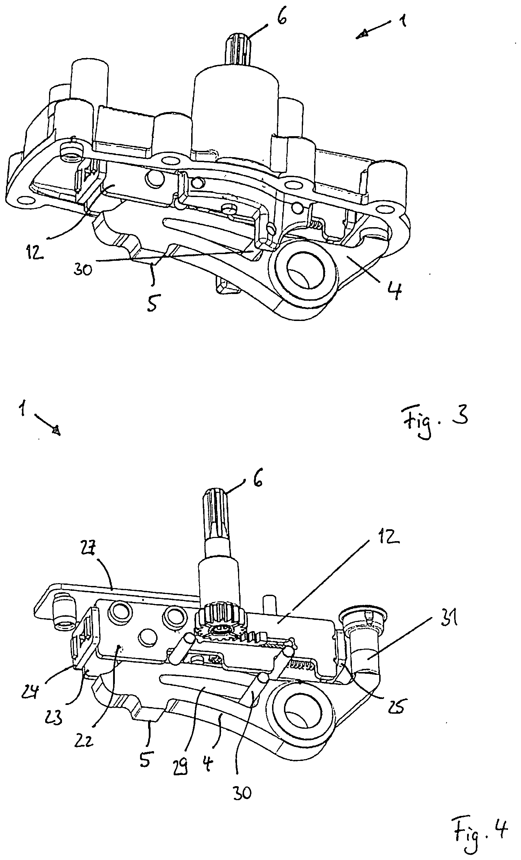

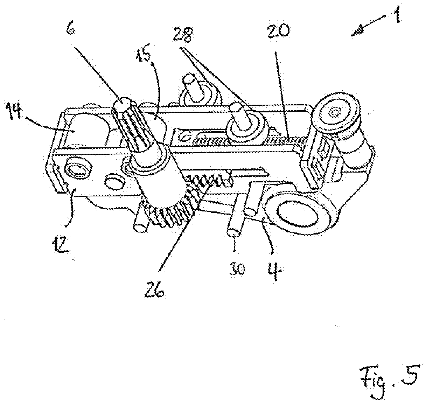

In den Figuren 1 bis 6 sind zwei Parksperren 1 dargestellt, wobei nur die wesentlichen Funktionsteile gezeigt sind. Abdeckungen und Anbindungsbauteile der Anordnung sind aus Gründen der Übersichtlichkeit weggelassen. Nachfolgend werden die erfindungsrelevanten Merkmale beschrieben, die auf einem grundsätzlichen Baukonzept einer Parksperre basieren, wie sie in der oben genannten DE 10 2010 053 857 A1 und DE 10 2011 080 498 A1 der Anmelderin im Detail erläutert sind. Auf diese vorbekannten Lösungen wird insofern ausdrücklich Bezug genommen, um betreffend das grundsätzliche Funktionsprinzip einer Parksperre Wiederholungen zu vermeiden.

Generell umfasst die Parksperre 1 eine Sperrverzahnung 2, die eine Anzahl Ausnehmungen 3 an ihrem Umfang aufweist. Weiteres zentrales Bauteil der Parksperre 1 ist eine Sperrklinke 4, die um eine Drehachse a schwenkbar angeordnet ist.

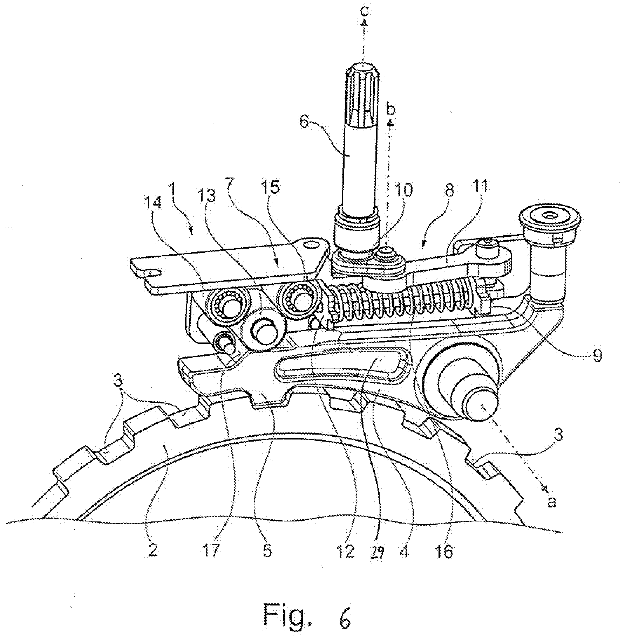

In Figur 6 ist die Sperrklinke 4 in einer nach unten (in Richtung auf die Sperrverzahnung 2 zu) gerichteten Stellung zu sehen, in der ein Klinkenzahn 5 der Sperrklinke 4 in eine der Ausnehmungen 3 der Sperrverzahnung 2 eingreift und so die Anordnung verriegelt.

Die Verriegelung bzw. Entriegelung der Parksperre 1 erfolgt über einen Aktuator 6, der hier als Welle angedeutet ist, die für das Ver- bzw. Entriegeln um eine Drehachse c dreht.

Die Übertragung der Bewegung des Aktuators 6 auf die Sperrklinke 4 erfolgt mittels eines Getriebeelements 7. Wie bei den genannten vorbekannten Lösungen, umfasst das Getriebeelement 7 einen linearverschieblichen Verriegelungskasten 12, in dem drei Rollen 13, 14 und 15 gelagert sind.

Die Rolle 13 kann dabei Kontakt mit einer Rampe 17 nehmen (s. Fig. 1), die an der Sperrklinke 4 ausgebildet ist. Bei linearer Bewegung des Verriegelungskastens 12 wird folglich die Sperrklinke 4 verschwenkt.

Im Falle der Figur 6 umfasst das Getriebeelement 7 einen Kurbeltrieb 8, mit dem ein Teil 9 des Getriebeelements 7 linear bewegt werden kann. Zwischen dem Teil 9 und dem Verriegelungskasten 12 ist eine Stange 16 angeordnet, so dass sich eine lineare Bewegung des Teils 9 auf den Verriegelungskasten 12 überträgt. Die Stange 16 ist von einer Druckfeder 20 umschlossen, die die Sperrklinke 4 vorspannt und in der verriegelten Position hält. Der Kurbeitrieb 8 hat dabei eine Kurbel 10 und einen Pleuel 11, die gelenkig miteinander verbunden sind. Die Kurbel 10 ist mit dem Aktuator 6 drehfest verbunden. Der Pleuel 11 ist mit dem Teil 9 gelenkig verbunden.

Wird nun der Aktuator 6 betrieben, d. h. erfolgt eine Drehung um die Achse c, bewegt sich die Kurbel 10 entsprechend mit und zieht das Pleuel 11 mit. Mit dem Kurbeltrieb 8 kann - aufgrund der Eigenschaft eines Kurbeltriebs - nun bei gleichem, kleinen anliegenden Drehmoment am Aktuator 6 anfangs eine große Kraft zum Entriegeln realisiert werden, ohne den Gesamtstellweg zu reduzieren. Gegen zunehmenden Stellwinkel bzw. -weg nimmt die Kraft dann ab, was in diesem Fall aber nicht stört, da eine große Kraft nur anfangs benötigt wird, bis (in diesem Fall) die Rolle 13 den Hochpunkt der Rampe 17 der Sperrklinke 4 erreicht hat und die Verriegelung der Sperrklinke durch die Rolle 13 somit aufgehoben wird.

Wie Figur 1 zu entnehmen ist, weist die Schwenkachse b der scharnierartigen Verbindung zwischen der Kurbel 10 und dem Pleuel 11 in vertikaler Richtung, während die Drehachse a der Sperrklinke 4 in horizontale Richtung weist. Projiziert man demgemäß die Schwenkachse b auf die Drehachse a, sind diese beiden Achsen zueinander rechtwinklig ausgerichtet.

Wie insbesondere aus Figur 1 zu entnehmen ist, wälzt die Rolle 13 auf der Sperrklinke 4 ab, während die Rollen 14, 15 auf der Armierung 27 abrollen. Die Armierung 27 ist als ein ebenes, gehärtetes Stahlblech ausgebildet und kontaktiert rückseitig das Gehäuse 21 der Parksperre 1.

In der dargestellten Ausführungsform sind die beiden gehäuseseitigen Rollen 14, 15 zur Reibungsminimierung nadelgelagert und bilden Stützrollen aus. Die dritte Rolle 13, die auf der Sperrklinke abrollt, ist eine Vollrolle.

Die Rollen sind in einem Verriegelungskasten 12 integriert. Der Verriegelungskasten 12 weist zwei längliche Seitenteile 22, 23 auf, die vorzugsweise als Blechstanzteile hergestellt sind. Beide Seitenteile 22, 23 sind durch zwei Querteile 24, 25 stirnseitig verbunden. Auch die Querteile 24, 25 sind vorzugsweise als Blechstanzteile hergestellt. Die Seitenteile 22, 23 und die Querteile 24, 25 können miteinander vernietet sein.

Der Verriegelungskasten 12 trägt ein Antriebszahnsegment 26 sowie Führungsrollen 28. Die Führungsrollen 28 sind so platziert, dass diese im optimalen Kraftfluss zum Antriebsritzel des Aktuators 6 stehen.

Der Verriegelungskasten 12 weist ferner die Druckfeder 20 auf, die auf dem Antriebszahnsegment 26 geführt ist. Er nimmt auch die Achsen der Stützrollen 14, 15 auf und führt diese axial.

Die Sperrklinke 4 weist eine Klinkenausnehmung 29 auf, in die ein Eingriffsmittel 30 eingreift.

Die Klinkenausnehmung 29 ist als ein Langloch ausgebildet, und das Eingriffsmittel 30 ist als ein Bolzen ausgebildet.

Die Parksperre weist ein Gehäuse 21 auf, in dem das Eingriffsmittel 30 ortsfest angeordnet ist.

Das Eingriffsmittel 30 und die Klinkenausnehmung 29 bilden eine Verliersicherung.

Die Sperrklinke 4 ist über eine Rolle 13, 14, 15 betätigt, wobei die Sperrklinke 4 durch ein Vorspannmittel gegen die Rolle 13, 14, 15 vorgespannt ist.

Das Vorspannmittel ist als eine Arretierung 31 ausgebildet. Die Arretierung 31 ist im Gehäuse 21 der Parksperre angeordnet und mit einer Kugel 32 gegen die Sperrklinke 4 vorgespannt. Die Arretierung 31 ist in Bezug auf den Drehpunkt auf der der Sperrklinke 4 abgewandten Seite von der Rolle 13 angeordnet.

### Bezugszeichenliste

- 1: Parksperre
- 2: Sperrverzahnung
- 3: Ausnehmung
- 4: Sperrklinke
- 5: Klinkenzahn
- 6: Aktuator
- 7: Getriebeelement
- 8: Kurbeltrieb
- 9: Teils des Getriebeelements
- 10: Kurbel
- 11: Pleuel
- 12: Verriegelungskasten
- 13: Rolle
- 14: Rolle
- 15: Rolle
- 16: Stange
- 17: Rampe
- 20: Druckfeder
- 21: Gehäuse
- 22: Seitenteil
- 23: Seitenteil
- 24: Querteil
- 25: Querteil
- 26: Antriebszahnsegment
- 27: Armierung
- 28: Führungsrolle
- 29: Klinkenausnehmung
- 30: Eingriffsmittel
- 31: Arretierung
- 32: Kugel

- a: Drehachse der Sperrklinke
- b: Schwenkachse der Verbindung zwischen Kurbel und Pleuel
- c: Drehachse des Aktuators

## Patentansprüche

1. Parksperre (1) für ein Kraftfahrzeug, wobei die Parksperre (1) aufweist:
- eine Sperrklinke (4), die um eine Drehachse (a) schwenkbar angeordnet ist und einen Klinkenzahn (5) aufweist, der zum formschlüssigen Eingriff in ein Parksperrenrad ausgebildet ist, wobei
die Sperrklinke (4) eine Klinkenausnehmung (29) aufweist, in die ein Eingriffsmittel (30) eingreift, **dadurch gekennzeichnet, dass** die Sperrklinke (4) über eine Rolle (13, 14, 15) betätigt ist, wobei die Sperrklinke (4) durch ein Vorspannmittel gegen die Rolle (13, 14, 15) vorgespannt ist.

2. Parksperre (1) nach Anspruch 1, **dadurch gekennzeichnet, dass** die Klinkenausnehmung (29) als ein Langloch und das Eingriffsmittel (30) als ein Bolzen ausgebildet sind.

3. Parksperre (1) nach Anspruch 1 oder 2, **dadurch gekennzeichnet, dass** die Parksperre (1) ein Gehäuse (21) aufweist, in dem das Eingriffsmittel (30) ortsfest angeordnet ist.

4. Parksperre (1) nach einem der vorhergehenden Ansprüche, **dadurch gekennzeichnet, dass** das Eingriffsmittel (30) und die Klinkenausnehmung (29) eine Verliersicherung bilden.

5. Parksperre (1)nach einem der vorhergehenden Ansprüche, **dadurch gekennzeichnet, dass** das Vorspannmittel als eine Arretierung (31) ausgebildet ist.

6. Parksperre (1) nach Anspruch 5, **dadurch gekennzeichnet, dass** die Arretierung (31) im Gehäuse (21) der Parksperre angeordnet ist und mit einer Kugel (32) gegen die Sperrklinke (4) vorgespannt ist.

7. Parksperre (1) nach Anspruch 2, **dadurch gekennzeichnet, dass** die Langlochbreite sich über dessen Länge ändert.

## Claims

1. A park lock (1) for a motor vehicle, wherein the park lock (1) has:
- a locking pawl (4), which is pivotably arranged about an axis of rotation (a) and has a pawl tooth (5), which is designed for positive engagement in a park lock gear, wherein
the locking pawl (4) has a pawl recess (29), into which an engaging means (30) engages, **characterised in that** the locking pawl (4) is actuated by a roller (13, 14, 15), wherein the locking pawl (4) is prestressed by a prestressing means against the roller (13, 14, 15).

2. The park lock (1) according to claim 1, **characterised in that** the pawl recess (29) is designed as an elongated hole and the engaging means (30) is designed as a bolt.

3. The park lock (1) according to claim 1 or 2, **characterised in that** the park lock (1) has a housing (21), in which the engaging means (30) is arranged in a stationary manner.

4. The park lock (1) according to any one of the preceding claims, **characterised in that** the engaging means (30) and the pawl recess (29) form a loss-preventing retainer.

5. The park lock (1) according to any one of the preceding claims, **characterised in that** the prestressing means is designed as a detent (31).

6. The park lock (1) according to claim 5, **characterised in that** the detent (31) is arranged in the housing (21) of the park lock and is prestressed against the locking pawl (4) with a ball (32).

7. The park lock (1) according to claim 2, **characterised in that** the elongated hole width changes over its length.

## Revendications

1. Frein de stationnement (1) pour un véhicule automobile, le frein de stationnement (1) présentant:
- un cliquet de verrouillage (4) disposé pour pouvoir pivoter autour d'un axe de rotation (a) et présentant une dent de cliquet (5), laquelle est conçue pour venir en prise par complémentarité de forme avec une roue du frein de stationnement,
le cliquet de verrouillage (4) présentant un évidement de cliquet (29) dans lequel vient en prise un moyen de mise en prise (30), **caractérisé en ce que** le cliquet de verrouillage (4) est actionné par l'intermédiaire d'un galet (13, 14, 15), le cliquet de verrouillage (4) étant précontraint par un moyen de précontrainte contre le galet (13, 14, 15).

2. Frein de stationnement (1) selon la revendication 1, **caractérisé en ce que** l'évidement de cliquet (29) est réalisé sous la forme d'un trou oblong et le moyen de mise en prise (30) est réalisé sous la forme d'un pêne.

3. Frein de stationnement (1) selon la revendication 1 ou 2, **caractérisé en ce que** le frein de stationnement (1) présente un boîtier (21) dans lequel le moyen de mise en prise (30) est disposé de manière fixe.

4. Frein de stationnement (1) selon l'une quelconque des revendications précédentes, **caractérisé en ce que** le moyen de mise en prise (30) et l'évidement de cliquet (29) forment un système anti-perte.

5. Frein de stationnement (1) selon l'une quelconque des revendications précédentes, **caractérisé en ce que** le moyen de précontrainte est conçu sous la forme d'un loquet (31).

6. Frein de stationnement (1) selon la revendication 5, **caractérisé en ce que** le loquet (31) est disposé dans le boîtier (21) du frein de stationnement et précontraint contre le cliquet de verrouillage (4) avec une bille (32).

7. Frein de stationnement (1) selon la revendication 2, **caractérisé en ce que** la largeur du trou oblong change sur sa longueur.
